# EUROPÄISCHE PATENTSCHRIFT

(11) **EP 1 111 408 B1**
(45) Veröffentlichungstag und Bekanntmachung des Hinweises auf die Patenterteilung: **30.08.2006**
(21) Anmeldenummer: 00128124.5
(22) Anmeldetag: 22.12.2000
(51) Int. Cl.: G01T 1/105, G01T 1/29

(54) **Vorrichtung zum Auslesen von in einer Speicherschicht abgespeicherten Informationen sowie Röntgenkassette und Röntgentisch**
Device for reading out information stored in a memory layer and X-ray cassette and X-ray table
Dispositif pour lire les informations contenues sur une surface de mémorisation et cassette à rayons X et table radiologique

(30) Priorität: 23.12.1999 DE 19962773
(43) Veröffentlichungstag der Anmeldung: 27.06.2001
(73) Patentinhaber: Agfa-Gevaert HealthCare GmbH, 51373 Leverkusen (DE)
(72) Erfinder: Gebele, Herbert, 82054 Sauerlach (DE); Müller, Jürgen, 81545 München (DE); Schaller, Hans, 81929 München (DE)

(56) Entgegenhaltungen:
- EP-A- 0 287 129
- WO-A-99/28765
- US-A- 4 896 037
- US-A- 5 072 118

## Beschreibung

Die vorliegende Erfindung betrifft eine Vorrichtung zum Auslesen von in einer Speicherschicht abgespeicherten Informationen gemäß den Oberbegriffen der Ansprüche 1 und 3 sowie eine Röntgenkassette und einen Röntgentisch.

Insbesondere für medizinische Zwecke wird von einem Objekt, beispielsweise einem Patienten, mittels einer Röntgenstrahlung ein Bild erzeugt, das in einer Speicherschicht als latentes Bild abgespeichert wird. Als Speicherschicht wird dabei zumeist eine Phosphorschicht verwendet. Zum Auslesen des in der Speicherschicht abgespeicherten Röntgenstrahlenbildes wird die Speicherschicht mittels einer Strahlungsquelle angeregt. Sie emittiert daraufhin aufgrund dieser Anregung Licht, das eine Intensität entsprechend des abgespeicherten Röntgenstrahlenbildes aufweist. Das von der Speicherschicht ausgesandte Licht wird von einem Empfangsmittel empfangen und anschließend in elektrische Signale gewandelt, so dass das in der Speicherschicht abgespeicherte Röntgenstrahlenbild anschließend sichtbar gemacht werden kann. Das Röntgenstrahlenbild kann beispielsweise direkt auf einem Monitor dargestellt oder auch auf einen speziell für Röntgenbilder verwendbaren fotografischen Röntgenfilm geschrieben werden.

Eine Vorrichtung zum Auslesen von in einer Speicherschicht abgespeicherten Informationen ist aus der Patentanmeldung WO 99/28765 bekannt. Bei dieser bekannten Vorrichtung wird die Speicherschicht zeilenweise durch eine Anregungsstrahlung angeregt, die von einer Strahlungsquelle erzeugt wird. Die Strahlungsquelle kann beispielsweise eine Laserdiodenzeile sein. Das aufgrund der Anregung von der Speicherschicht emittierte Licht wird von einem Empfangsmittel empfangen. Dazu weist dieses Empfangsmittel eine Vielzahl von lichtempfindlichen Flächen auf, die in einer Zeile nebeneinander angeordnet sind. Die von der Speicherschicht emittierte Strahlung wird von den lichtempfindlichen Flächen empfangen. Das Empfangsmittel kann eine Charge-Coupled-Device(CCD)-Zeile sein, die eine Vielzahl von zeilenweise nebeneinander angeordneten Fotodetektoren enthält. Zum Auslesen der in der Speicherschicht abgespeicherten Informationen werden die Strahlungsquelle und das Empfangsmittel mittels eines Linearmotors über die Speicherschicht gefahren.

EP 0 287 129 A1 offenbart einen Röntgentisch mit einem Endlosband, auf welchem die Speicherschicht aufgebracht ist. Bei einer Röntgenaufnahme wird der obere Abschnitt des Bandverlaufs des Endlosbandes Röntgenstahlung ausgesetzt, wobei Informationen in der Speicherschicht aufgezeichnet werden. Das Endlosband wird anschließend in den unteren Abschnitt des Bandverlaufs und dabei an einer Ausleseeinheit vorbei befördert, wobei die Speicherschicht ausgelesen wird. Zwischen dem oberen und unteren Abschnitt des Bandverlaufs ist eine Bleiplatte angeordnet, die verhindern soll, dass Röntgenstahlung auf die Speicherschicht im unteren Abschnitt des Bandverlaufs treffen kann.

US 5,072,118 offenbart ein Radiographiesystem mit einer höhenverstellbaren Aufzeichnungseinheit, in welcher eine Speicherschicht mit Röntgenstrahlung bestrahlt werden kann. Um die hinter der Aufzeichnungseinheit befindlichen Komponenten des Systems gegen Röntgenstrahlung abzuschirmen, sind zwischen der Aufzeichnungseinheit und den Komponenten mehrere Abschirmplatten vorgesehen.

US 4,896,037 offenbart einen Röntgensystem mit einer Röntgenquelle und einem Röntgentisch, wobei zwischen der Röntgenquelle und dem Röntgentisch ein drehbares Filter vorgesehen ist, das je nach Drehposition hoch- oder niederenergetische Röntgenstrahlung der Röntgenquelle durchlässt.

Ausgehend von der Patentanmeldung WO 99/28765 liegt der vorliegenden Erfindung die Aufgabe zugrunde, auf einfache und effektive Weise die Wiedergabe von abgespeicherten Informationen qualitativ zu verbessern.

Diese Aufgabe wird gemäß der technischen Lehren der Ansprüche 1, 3 oder 7 gelöst.

Aufgrund der Erfindung kann vorteilhafterweise ein Auftreffen einer hochenergetischen Abspeicherstrahlung auf das Lesemittel vermieden werden. Das Lesemittel enthält Halbleiter-Bauelemente, die gegen die energiereiche Abspeicherstrahlung empfindlich sind. Aufgrund der Erfindung ist es vorteilhafterweise möglich, eine Entstehung von Gitterfehlstellen innerhalb dieser Halbleiter-Bauelemente zu verhindern oder zumindest zu reduzieren. Durch solche Gitterfehlstellen können sich die spezifischen Kenndaten der Halbleiter-Bauelemente mit zunehmender Bestrahlungshäufigkeit mittels der Abspeicherstrahlung verändern. Es können Alterungserscheinungen der Halbleiter-Bauelemente auftreten, die wiederum zu einer Einbuße an Bildqualität bei der Wiedergabe der abgespeicherten Informationen führen können. Das Signal-zu-Rausch-Verhältnis bei der Wiedergabe der abgespeicherten Informationen wird verschlechtert. Dies wird aufgrund der Erfindung vermieden.

In einer vorteilhaften Ausgestaltung der Erfindung enthält das Abschirmmittel, mit dem das Lesemittel gegen die Abspeicherstrahlung abgeschirmt wird, um ein Auftreffen der Abschirmstrahlung auf das Lesemittel zu verhindern, Blei. Dadurch läßt sich auf einfache und effektive Weise vor allem eine als Abspeicherstrahlung verwendete Röntgenstrahlung abschirmen.

In einer weiteren vorteilhaften Ausgestaltung der Erfindung wird mittels des erfindungsgemäßen Wandlungsmittels zur Wandlung der Abspeicherstrahlung in eine Strahlung, die bezüglich ihres Energiegehaltes reduziert ist, eine Wellenlängenwandlung durchgeführt. Dadurch kann beispielsweise eine Röntgenstrahlung in einen Wellenlängenbereich transformiert werden, der sich im sichtbaren Teil des Spektrums befindet, insbesondere im blauen oder im ultravioletten Berich des Spektrums.

In einer weiteren, besonders vorteilhaften Ausgestaltung der Erfindung, ist das Abschirm- oder das Wandlungsmittel über einer Ruheposition für das Lesemittel angeordnet. Dadurch kann die Größe des Abschirmungs- oder Wandlungsmittels begrenzt werden. Des weiteren wird dem Abschirmungs- oder Wandlungsmittel innerhalb der erfindungsgemäßen Vorrichtung ein fester Platz zugeordnet. Es ist daher sichergestellt, dass das Lesemittel bei der Abspeicherung von Informationen in der Speicherschicht vor der hochenergetischen Abschirmungsstrahlung geschützt ist.

Vorteilhafterweise ist in dem durch das Abschirmungs- oder Wandlungsmittel geschützte Lesemittel ebenfalls eine Strahlungsquelle zum Anregen der Speicherschicht enthalten. Diese Strahlungsquelle wird daher gleichzeitig mit dem Empfangsmittel vor der Abspeicherstrahlung beschützt.

Weitere vorteilhafte Ausgestaltungen sind den abhängigen Ansprüchen zu entnehmen.

Im folgenden werden die Erfindung und ihre Vorteile anhand von Ausführungsbeispielen und der Zeichnungen beschrieben.

Es zeigen:
- Fig. 1: ein Ausführungsbeispiel einer erfindungsgemäßen Röntgenkassette,
- Fig. 2: eine detailliertere, schematische Ansicht des Ausführungsbeispiels der Röntgenkassette während des Auslesens von abgespeicherten Informationen,
- Fig. 3: eine weitere schematische Ansicht des Ausführungsbeispiels der Röntgenkassette während der Aufnahme eines Röntgenstrahlenbildes,
- Fig. 4: eine detaillierte, schematische Ansicht eines weiteren Ausführungsbeispiels der erfindungsgemäßen Röntgenkassette mit einem Wandlungsmittel während der Bestrahlung mit Röntgenstrahlung und
- Fig. 5: ein Ausführungsbeispiel eines erfindungsgemäßen Röntgentisches mit einer Röntgenkassette.

Im folgenden werden für gleiche oder gleich wirkende Elemente gleiche Bezugszeichen verwendet.

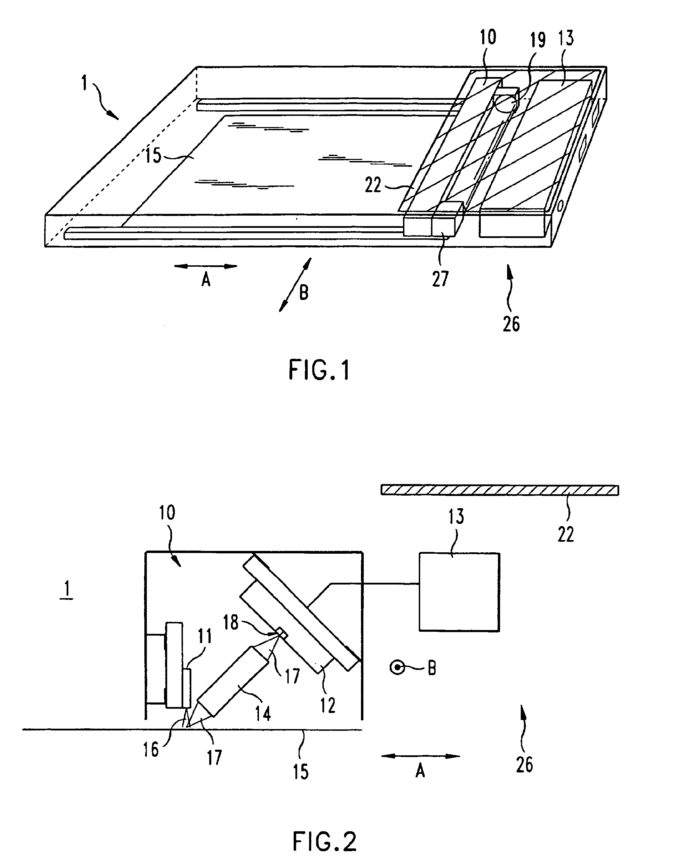

Fig. 1 zeigt ein Ausführungsbeispiel einer erfindungsgemäßen Röntgenkassette 1. Diese Röntgenkassette 1 enthält eine Speicherschicht 15. Die Speicherschicht 15 ist hier eine Phosphorplatte. In der Phosphorplatte 15 können Röntgenstrahlenbilder abgespeichert werden. Zum Auslesen der in der Phosophorplatte 15 abgespeicherten Röntgenstrahlenbilder enthält die Röntgenkassette 1 einen Lesekopf 10. Der Lesekopf 10 ist mittels eines Antriebs 27 entlang zweier Führungsstäbe in eine Vorschubrichtung A über die Oberfläche der Phosphorplatte 15 transportierbar. Der Antrieb 27 kann beispielsweise ein Linearmotor sein. Hinter dem Lesekopf 10 ist eine Löschlampe 19 angebracht. Die Löschlampe 19 ist mit dem Lesekopf 10 verbunden und kann - ebenso wie der Lesekopf 10 - mittels des Antriebes 27 über die Oberfläche der Phosphorplatte 15 in die Vorschubrichtung A transportiert werden. Die Löschlampe 19 dient zum Löschen von in der Phosphorplatte 15 abgespeicherten Informationen, die nach dem Auslesen eines Röntgenstrahlenbildes durch den Lesekopf 10 weiterhin in der Phosphorplatte 15 abgespeichert sind. Die Löschlampe 19 und der Lesekopf 10 erstrecken sich in eine Zeilenrichtung B über die gesamte Breite der Phosphorplatte 15. Die Zeilenrichtung B liegt senkrecht zur Vorschubrichtung A.

Die Röntgenkassette 1 enthält des weiteren ein Steuermittel 13, mit dem die in der Röntgenkassette 1 enthaltenen Komponenten angesteuert werden. Der Lesekopf 10, die Löschlampe 19 und das Steuermittel 13 sind innerhalb der Röntgenkassette 1 gemäß der Fig. 1 rechts neben der Phosphorplatte 15 angeordnet. Lesekopf 10, Löschlampe 19 und Steuermittel 13 befinden sich in einer Ruheposition 26. In dieser Ruheposition 26 werden der Lesekopf 10 und die Löschlampe 19 nicht mittels des Antriebes 27 über die Oberfläche der Phosphorplatte 15 gefahren. Über der Ruheposition 26 ist ein Abschirmmittel 22 angeordnet. Das Abschirmmittel 22 ist hier in diesem Ausführungsbeispiel eine Bleiabschirmung. Lesekopf 10, Löschlampe 19 und das Steuermittel 13 sind mittels der Bleiabdeckung 22 gegen eine auf die Röntgenkassette 1 gerichtete Röntgenstrahlung geschützt. Eine solche Röntgenstrahlung wird von der Bleiabdeckung 22 nicht durchgelassen. Die Bleiabdeckung 22 ist mit der Oberseite (Deckel) des Gehäuses der Röntgenkassette 1 fest verbunden. Es ist ebenso möglich, die Bleiabdeckung 22 nicht mit dem Gehäuse der Röntgenkassette 1 zu verbinden, sondern die Bleiabdeckung 22 an der transportierbaren Einheit von Lesekopf 10, Löschlampe 19 und Steuermittel 13 zu befestigen. Das Steuermittel 13 kann fest in der Röntgenkassette 1 angebracht sein. Es ist nicht notwendig, das Steuermittel 13 mit dem durch den Antrieb 27 über die Oberfläche der Phosphorplatte 15 transportierbaren Lesekopf 10 und der Löschlampe 19 mitzuführen. Durch eine entsprechende Verkabelung zwischen dem Steuermittel 13 einerseits und dem Lesekopf 10 und der Löschlampe 19 andererseits ist eine Steuerung des Lesekopfes 10 und der Löschlampe 19 auch dann möglich, wenn ein Auslesen der in der Phosphorplatte 15 abgespeicherten Informationen erfolgt.

Anstelle der Bleiabdeckung 22 können auch andere Materialien zum Abschirmen des Lesekopfes 10, der Löschlampe 19 und des Steuermittels 13 eingesetzt werden. Es ist möglich, statt des Abschirmmittels 22 ein Wandlungsmittel vorzusehen, mit dem die energiereiche Abspeicherstrahlung (Röntgenstrahlung) bezüglich ihrer Energie reduziert wird.

Fig. 2 zeigt eine detailliertere Ansicht der Röntgenkassette 1 gemäß der Fig. 1. Es ist der Lesekopf 10 dargestellt, der eine Strahlungsquelle 11 enthält. Diese Strahlungsquelle 11 ist hier eine Laserdiodenzeile mit einer Vielzahl von nebeneinander angeordneten Laserdioden. Mittes der Laserdiodenzeile 11 ist eine Anregungsstrahlung 16 erzeugbar, die zum Anregen der Phosphorplatte 15 dient. Im vorliegenden Ausführungsbeispiel wird die Phosphorplatte 15 zeilenweise angeregt. Aufgrund der Anregung mittels der Anregungsstrahlung 16 emittiert die Phosphorplatte 15 eine Emissionsstrahlung 17. Diese wird von einem optischen Abbildungsmittel 14, das beispielsweise Mikrolinsen enthalten kann, auf eine CCD-Zeile 12 abgebildet. Die CCD-Zeile 12 enthält eine Vielzahl von nebeneinander angeordneten lichtempfindlichen Flächen 18. Auf diese Weise kann ein Abbild der in einer Zeile der Phosphorplatte 15 abgespeicherten Informtionen von der CCD-Zeile 12 erfaßt und in elektrische Signale gewandelt werden. Diese von der CCD-Zeile 12 erzeugten Signale werden an das Steuermittel 13 weitergeleitet, das zu diesem Zweck mit dem Lesemittel 10 und insbesondere mit der CCD-Zeile 12 verbunden ist.

In dem Beispiel gemäß der Fig. 2 wird der Lesekopf 10 von dem Antrieb 27 angetrieben, um die in der Phosphorplatte 15 abgespeicherten Informationen auszulesen. Der Lesekopf 10 befindet sich in dem Beispiel gemäß der Fig. 2 nicht in seiner Ruheposition 26. Vielmehr befindet sich der Lesekopf 10 hier links neben der Ruheposition 26, die wiederum durch die Bleiabdeckung 22 abgedeckt ist. Beim Auslesen der in der Phosphorplatte 15 abgespeicherten Informationen findet ein gleichzeitiges Abspeichern von neuen Informationen in der Phosphorplatte 15 nicht statt.

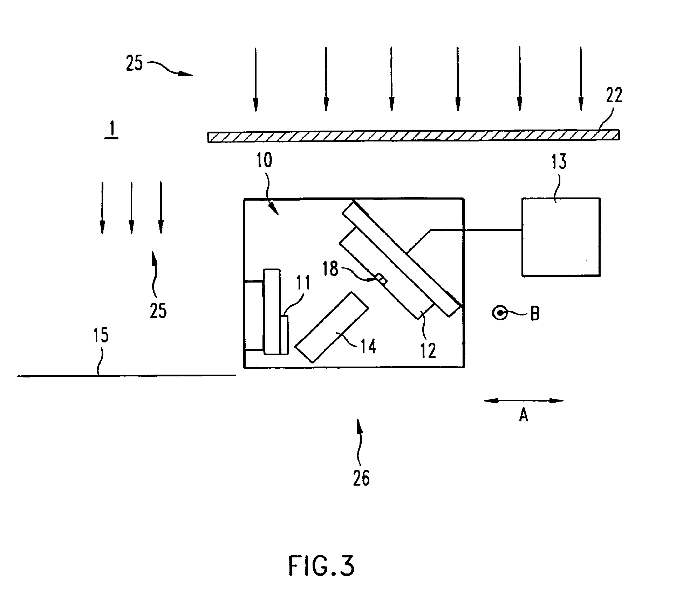

Fig. 3 zeigt ein weiteres Beispiel der erfindungsgemäßen Röntgenkassette. Bei diesem Beispiel werden Informationen in der Phosphorplatte 15 abgespeichert. Zu diesem Zweck wird von einer Röntgenstrahlenquelle (nicht dargestellt) eine Röntgenstrahlung 25 in Richtung der Röntgenkassette ausgegeben. Diese Röntgenstrahlung 25 trifft im wesentlichen auf die gesamte Ausdehnung der Röntgenkassette 1. In dem Beispiel gemäß der Fig. 3 wird die Funktion der Bleiabdeckung 22 deutlich. Die auf die Bleiabdeckung 22 treffende Röntgenstrahlung 25 wird abgeschirmt und kann somit nicht auf den Lesekopf 10 und das Steuermittel 13 treffen. Die in dem Lesekopf 10 und dem Steuermittel13 enthaltenen Bauteile werden von der hochenergetische Röntgenstrahlung 25 nicht bestrahlt.

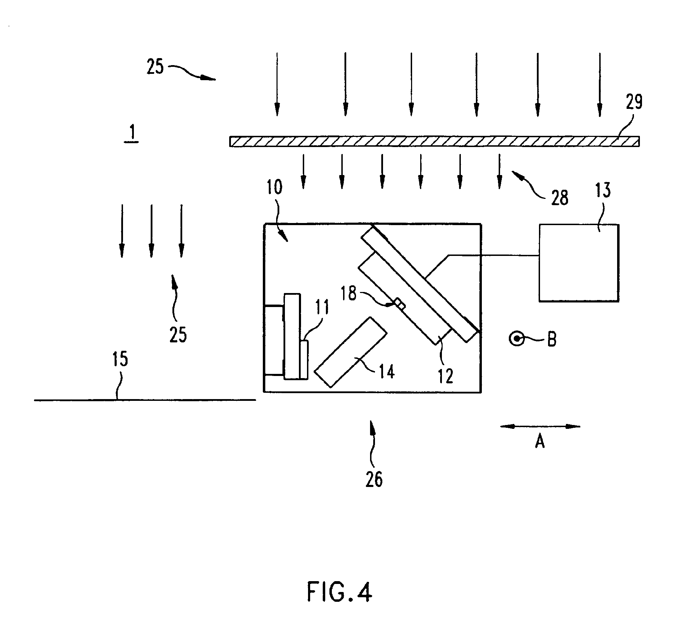

Fig. 4 zeigt ein weiteres Ausführungsbeispiel der erfindungsgemäßen Röntgenkassette 1. Anstelle der Bleiabdeckung 22 enthält die Röntgenkassette 1 hier ein Wandlungsmittel 29. Dieses Wandlungsmittel 29 wandelt die Röntgenstrahlung 25 in eine Wandlungsstrahlung 28. Die Wandlungsstrahlung 28 hat eine Energie, die wesentlich geringer ist als diejenige der Röntgenstrahlung 25. Das Wandlungsmittel 29 kann beispielsweise eine sogenannte Scintillationsschicht sein, wie sie aus der Patentschrift DE 195 05 729 C1 bekannt ist. Durch eine solche Scintillationsschicht 29 kann die Wellenlänge der Anregungsstrahlung 25 transformiert werden. Die Wellenlänge der Wandlungsstrahlung 28 liegt hier aufgrund der durch das Wandlungsmittel 29 durchgeführten Wellenlängenwandlung in etwa im blauen oder ultravioletten Bereich des Spektrums.

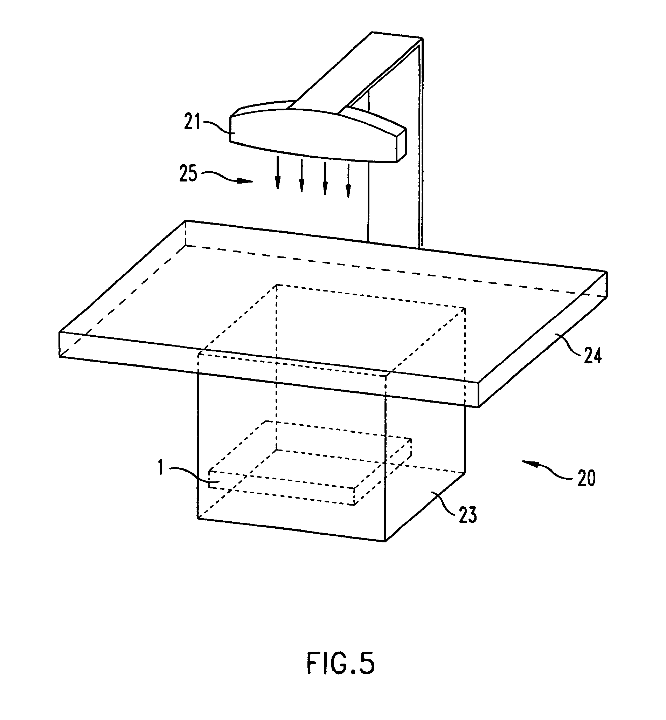

Fig. 5 zeigt ein Ausführungsbeispiel eines erfindungsgemäßen Röntgentisches 20, in dem die zuvor beschriebene Röntgenkassette 1 eingesetzt ist. Der Röntgentisch 20 enthält einen Röntgenfuß 23, in dem sich die Röntgenkassette 1 befindet, und eine auf dem Röntgenfuß 23 angeordnete Auflagefläche 24. Auf diese Auflagefläche 24 werden zur Röntgenaufnahme Patienten gelegt. Über der Auflagefläche 24 und dem Röntgenfuß 23 mit der darin befindlichen Röntgenkassette 1 ist eine Röntgenquelle 21 an dem Röntgentisch 20 angebracht. Die Röntgenquelle 21 emittiert zur Aufnahme des Röntgenstrahlenbildes in der Phosphorplatte die Röntgenstrahlung 25 in Richtung der Auflagefläche 24.

## Patentansprüche

1. Röntgenkassette (1) mit einer Speicherschicht (15) zum Abspeichern von Informationen, die mittels einer Abspeicherstrahlung (25) in der Speicherschicht (15) abspeicherbar sind, und mit einer Vorrichtung zum Auslesen von in der Speicherschicht (15) abgespeicherten Informationen, wobei die Vorrichtung umfasst:
- ein Lesemittel (10), das ein Empfangsmittel (12) zum Empfangen einer Emissionsstrahlung (17) aufweist, die von der Speicherschicht (15) aufgrund eines Anregens mittels einer Anregungsstrahlung (16) ausgebbar ist,
- ein Transportmittel (27) zum Transportieren des Lesemittels (10) über die Speicherschicht (15), um die in der Speicherschicht (15) abgespeicherten Informationen auszulesen,
- eine Ruheposition (26) für das Lesemittel (10), in der sich das Lese mittel (10) befindet, wenn es nicht mittels Transportmittel (27) über die Speicherschicht (15) bewegt wird,
**gekennzeichnet durch**
ein Abschirmmittel (22) zum Abschirmen des Lesemittels (10) gegen die Abspeicherstrahlung (25), wobei das Abschirmmittel (22) über der Ruheposition (26) angeordnet ist.

2. Röntgenkassette (1) nach Anspruch 1, **dadurch gekennzeichnet, dass** das Abschirmmittel (22) Blei enthält.

3. Röntgenkassette (1) mit einer Speicherschicht (15) zum Abspeichern von Informationen, die mittels einer Abspeicherstrahlung (25) in der Speicherschicht (15) abspeicherbar sind, und mit einer Vorrichtung zum Auslesen von in der Speicherschicht (15) abgespeicherten Informationen, wobei die Vorrichtung umfasst:
- ein Lesemittel (10), das ein Empfangsmittel (12) zum Empfangen einer Emissionsstrahlung (17) aufweist, die von der Speicherschicht (15) aufgrund eines Anregens mittels einer Anregungsstrahlung (16) ausgebbar ist,
- ein Transportmittel (27) zum Transportieren des Lesemittels (10) über die Speicherschicht (15), um die in der Speicherschicht (15) abgespeicherten Informationen auszulesen,
- eine Ruheposition (26) für das Lesemittel (10), in der sich das Lesemittel (10) befindet, wenn es nicht mittels Transportmittel (27) über die Speicherschicht (15) bewegt wird,
**gekennzeichnet durch**
ein Wandlungsmittel (29) zum Wandeln der Abspeicherstrahlung (25), die eine erste Energie hat, in eine Wandlungsstrahlung (28), die eine zweite Energie hat, wobei die zweite Energie kleiner ist als die erste Energie wobei das Wandlungsmittel (29) über der Ruheposition (26) angeordnet ist.

4. Röntgenkassette (1) nach Anspruch 3, **dadurch gekennzeichnet, dass** das Wandlungsmittel (29) so ausgestaltet ist, dass es eine Wellenlängenwandlung ausführen kann.

5. Röntgenkassette (1) nach einem der vorhergehenden Ansprüche, **dadurch gekennzeichnet, dass** das Lesemittel (10) eine Strahlungsquelle (11) zum Erzeugen der Anregungsstrahlung (16) aufweist.

6. Röntgenkassette (1) nach Anspruch 5, **dadurch gekennzeichnet, dass** die Strahlungsquelle (11) so ausgestaltet ist, dass sie jeweils eine Zeile der Speicherschicht (15) anregt und das Empfangsmittel (12) eine Vielzahl von lichtempfindlichen Flächen (18) aufweist, die nebeneinander angeordnet sind.

7. Röntgentisch (20) mit einer Röntgenstrahlenquelle (21) zum Ausgeben von Röntgenstrahlung als Abspeicherstrahlung (25) und einer Röntgenkassette (1) nach einem der vorangehenden Ansprüche.

## Claims

1. X-ray cassette (1) having a storage layer (15) for storing information, which can be stored in the storage layer (15) by means of storage radiation (25), and having a device for reading out information stored in the storage layer (15), the device comprising:
- a reading means (10) which comprises a reception means (12) for receiving emission radiation (17), which can be output from the storage layer (15) owing to excitation by means of excitation radiation (16),
- a transport means (27) for transporting the reading means (10) over the storage layer (15), in order to read out the information stored in the storage layer (15),
- a resting position (26) for the reading means (10), in which the reading means (10) is located when it is not being moved over the storage layer (15) by means of the transport means (27),
**characterised by**
a shielding means (22) for shielding the reading means (10) against the storage radiation (25), the shielding means (22) being arranged over the resting position (26).

2. X-ray cassette (1) according to Claim 1, **characterised in that** the shielding means (22) contains lead.

3. X-ray cassette (1) having a storage layer (15) for storing information, which can be stored in the storage layer (15) by means of storage radiation (25), and having a device for reading out information stored in the storage layer (15), the device comprising:
- a reading means (10) which comprises a reception means (12) for receiving emission radiation (17), which can be output from the storage layer (15) owing to excitation by means of excitation radiation (16),
- a transport means (27) for transporting the reading means (10) over the storage layer (15), in order to read out the information stored in the storage layer (15),
- a resting position (26) for the reading means (10), in which the reading means (10) is located when it is not being moved over the storage layer (15) by means of the transport means (27),
**characterised by**
a conversion means (29) for converting the storage radiation (25), which has a first energy, into conversion radiation (28) which has a second energy, the second energy being less than the first energy, the conversion means (29) being arranged over the resting position (26).

4. X-ray cassette (1) according to Claim 3, **characterised in that** the conversion means (29) is configured so that it can carry but wavelength conversion.

5. X-ray cassette (1) according to one of the preceding claims, **characterised in that** the reading means (10) comprises a radiation source (11) for generating the excitation radiation (16).

6. X-ray cassette (1) according to Claim 5, **characterised in that** the radiation source (11) is configured so that it respectively excites a line of the storage layer (15), and the reception means (12) comprises a multiplicity of photosensitive surfaces (18) which are arranged next to one another.

7. X-ray table (20) having an X-ray source (21) for outputting X-radiation as storage radiation (25) and an X-ray cassette (1) according to one of the preceding claims.

## Revendications

1. Cassette de radiographie (1), comportant une couche de mémorisation (15) pour la mémorisation d'informations qui peuvent être mémorisées dans la couche de mémorisation (15) au moyen d'un rayonnement de mémorisation (25), et un dispositif pour la lecture d'informations mémorisées dans la couche de mémorisation (15), le dispositif comprenant :
- un moyen de lecture (10), comportant un moyen récepteur (12) pour la réception d'un rayonnement d'émission (17) pouvant être émis par la couche de mémorisation (15) en raison d'une excitation au moyen d'un rayonnement d'excitation (16),
- un moyen de transport (27) pour transporter le moyen de lecture (10) au-dessus de la couche de mémorisation (15), afin de lire les informations mémorisées dans la couche de mémorisation (15),
- une position de repos (26) pour le moyen de lecture (10), dans laquelle le moyen de lecture (10) est positionné lorsqu'il n'est pas déplacé au-dessus de la couche de mémorisation (15) par le moyen de transport (27),
**caractérisée par**
un moyen de blindage (22) pour protéger le moyen de lecture (10) contre le rayonnement de mémorisation (25), le moyen de blindage (22) étant disposé au-dessus de la position de repos (26).

2. Cassette de radiographie (1) selon la revendication 1, **caractérisée en ce que** le moyen de blindage (22) contient du plomb.

3. Cassette de radiographie (1), comportant une couche de mémorisation (15) pour la mémorisation d'informations qui peuvent être mémorisées dans la couche de mémorisation (15) au moyen d'un rayonnement de mémorisation (25), et un dispositif pour la lecture d'informations mémorisées dans la couche de mémorisation (15), le dispositif comprenant :
- un moyen de lecture (10), comportant un moyen récepteur (12) pour la réception d'un rayonnement d'émission (17) pouvant être émis par la couche de mémorisation (15) en raison d'une excitation au moyen d'un rayonnement d'excitation (16),
- un moyen de transport (27) pour transporter le moyen de lecture (10) au-dessus de la couche de mémorisation (15), afin de lire les informations mémorisées dans la couche de mémorisation (15),
- une position de repos (26) pour le moyen de lecture (10), dans laquelle le moyen de lecture (10) est positionné lorsqu'il n'est pas déplacé au-dessus de la couche de mémorisation (15) par le moyen de transport (27),
**caractérisée par**
un moyen de conversion (29) pour la conversion du rayonnement de mémorisation (25), qui possède une première énergie, en un rayonnement de conversion (28), qui possède une deuxième énergie, la deuxième énergie étant plus faible que la première énergie, et le moyen de conversion (29) étant disposé au-dessus de la position de repos (26).

4. Cassette de radiographie (1) selon la revendication 3, **caractérisée en ce que** le moyen de conversion (29) est agencé de telle sorte qu'il puisse effectuer une conversion de longueur d'onde.

5. Cassette de radiographie (1) selon l'une des revendications précédentes, **caractérisée en ce que** le moyen de lecture (10) comporte une source de rayonnement (11) pour la génération du rayonnement d'excitation (16).

6. Cassette de radiographie (1) selon la revendication 5, **caractérisée en ce que** la source de rayonnement (11) est agencée de telle sorte qu'elle excite respectivement une ligne de la couche de mémorisation (15), et en ce le moyen récepteur (12) comporte une pluralité de surfaces photosensibles (18) disposées les unes à coté des autres.

7. Table de radiographie (20), comportant une source (21) de rayons X pour l'émission de rayons X en tant que rayonnement de mémorisation (25), et une cassette de radiographie (1) selon l'une des revendications précédentes.
